(19) Europäisches Patentamt
European Patent Office
Office européen des brevets

(11) **EP 3 045 381 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **15190227.7**

(22) Anmeldetag: **16.10.2015**

(51) Int Cl.:
*B62D 55/21* (2006.01)     *B66C 9/00* (2006.01)
*E02F 9/02* (2006.01)     *B62D 55/14* (2006.01)
*B62D 55/20* (2006.01)

(54) **KETTENFAHRWERK SOWIE ARBEITSMASCHINE MIT KETTENANTRIEB**

CHAIN DRIVE AND WORKING MACHINE WITH CHAIN DRIVE

CHASSIS A CHAINE ET MACHINE DE TRAVAIL DOTEE D'ENTRAINEMENT A CHAINES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2015 DE 102015000485**

(43) Veröffentlichungstag der Anmeldung:
**20.07.2016 Patentblatt 2016/29**

(73) Patentinhaber: **Liebherr-Mining Equipment Colmar SAS**
**68025 Colmar cedex (FR)**

(72) Erfinder:
• **Neyer, Frédéric**
**68100 Mulhouse (FR)**

• **Dreyer, Vincent**
**68360 Soultz (FR)**
• **Weiss, Oliver**
**68770 Ammerschwihr (FR)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**DE-A1- 4 238 794          DE-B3-102011 012 711**
**DE-U1- 9 301 814          DE-U1-202008 008 063**
**DE-U1-202011 003 360      US-A- 5 704 697**
**US-A1- 2009 102 281**

**Beschreibung**

Die Erfindung betrifft ein Kettenfahrwerk für eine Arbeitsmaschine mit einer Kette, die wenigstens eine Rollenbahn, insbesondere zwei parallel verlaufende Rollenbahnen, umfasst, auf deren Lauffläche während des Raupenbetriebs wenigstens eine Laufrolle des Kettenfahrwerks bewegbar ist.

Ketten- bzw. Raupenfahrwerke umfassen wenigstens eine umlaufende Raupenkette, die sich aus einer Vielzahl an Kettengliedern zusammensetzt, die gelenkig miteinander verknüpft sind. Für den Antrieb der Kette sorgt wenigstens ein über ein Antriebsaggregat des Unterwagens angetriebenes Turasrad, dessen Verzahnung in die Kettenglieder zur Kraftübertragung eingreift. Zusätzlich sind wenigstens ein Umlenkrad sowie eine Vielzahl an Trag- und Laufrollen vorgesehen. Umlenkrad und Turasrad sind in Fahrtrichtung vorne und hinten montiert, die Laufrollen sind dazwischen entlang der Aufstandsfläche angeordnet und die Tragrollen sind den Laufrollen gegenüberliegend im Bereich des zurücklaufenden Kettentrrums gelagert. Das Umlenkrad, auch als Leitrad bezeichnet, ist üblicherweise verlagerbar am Unterwagen befestigt und sorgt dadurch für die notwendige Kettenspannung. Über die Laufrollen kann die Last des Fahrzeugs gleichmäßig oder nicht gleichmäßig in die resultierende Aufstandsfläche der Raupenkette eingebracht werden.

Die Kontaktflächen zwischen den Laufrollen und den innenliegenden Flächen der einzelnen Kettenglieder werden als Rollenbahn bezeichnet, wobei sich die Rollenbahn aus den verknüpften Kettengliedern zusammensetzt. Es sind Varianten mit ein oder mehreren Rollenbahnen bekannt, wobei die zweiten Variante vorsieht, dass jedes Kettenglied zwei oder mehr parallel verlaufende Rollenbahnen aufweist, auf denen separate Felgen eines einzelnen Laufrades laufen. Die Kontaktfläche der Felgen wird als Lauffläche der Laufrollen bezeichnet.

Auftretende Kräfte werden im Maschinenbetrieb Großteils über die Kontaktflächen des Kettenantriebes in die Bodenaufstandsfläche abgeleitet, weshalb insbesondere die Rollenbahnen der Kettenglieder und Laufrollen hohem Verschleiß unterliegen. Das notwendige seitliche Spiel zwischen Laufrollen und Kettenglieder fördert den Verschleiß zusätzlich, da relative Verschiebungen bzw. Verkippung zu einer ungleichmäßigen Kraftübertragung führen können und es insbesondere zu punktuellen starken Belastungsspitzen des Materials kommen kann. Dies ist gerade bei Arbeiten auf unebenen Aufstandsflächen ein Problem.

Um den auftretenden Verschleiß einzudämmen werden relevante Oberflächen der Kette bzw. des Laufrades im Bereich ihrer Laufflächen gehärtet. Jedoch kann es gerade bei temporären punktuelle starken Belastung zu Spannungsspitzen kommen, die massive Schäden am Material durch Rißbildung zur Konsequenz haben können. Die US 5 704 697 A offenbart als nächstliegender Stand der Technik ein Kettenfahrwerk umfassend eine Kette mit einer Rollenbahn in Kombination mit einer Laufrolle,- gemäß den Merkmalen der Präambel von Anspruch 1.

Die Aufgabe der vorliegenden Erfindung besteht deshalb darin, den Anpressdruck zwischen Laufrollen und Kette möglichst konstant zu halten und weitestgehend zu minimieren. Dadurch soll der Verschleiß reduziert und die Lebensdauer des Kettenfahrwerks erhöht werden.

Gelöst wird diese Aufgabe durch ein Kettenfahrwerk gemäß den Merkmalen des Anspruchs 1. Vorteilhafte Ausgestaltungen des Kettenfahrwerks sind Gegenstand der sich an den Hauptanspruch anschließenden abhängigen Ansprüche.

Ausgehend von einem Kettenfahrwerk für eine Arbeitsmaschine mit einer Kette die wenigstens eine Rollenbahn, insbesondere wenigstens zwei parallel verlaufende Rollenbahnen, umfasst, auf deren Lauffläche während des Raupenbetriebs wenigstens eine Laufrolle des Kettenfahrwerks bewegbar ist, wird erfindungsgemäß das transversale Profil der Lauffläche der wenigstens einen Rollenbahn der Kette als auch die abrollende Lauffläche der wenigstens einen Laufrolle dahingehend modifiziert, so dass der Anpressdruck zwischen beiden Komponenten möglichst gering ist und dadurch der auftretende Verschleiß weitestgehend reduziert werden kann.

Unter dem transversalen Profil ist die Oberflächenkontur der Laufflächen quer zur Laufrichtung zu verstehen. Erfindungsgemäß wird dabei vorgesehen, dass sowohl die Lauffläche wenigstens einer Rollenbahn der Kette, als auch die darauf abrollende Lauffläche wenigstens einer Laufrolle zumindest abschnittsweise eine konvexe Kontur in einer Richtung quer zur Laufrichtung aufweisen.

Die zumindest abschnittsweise konvexe Kontur des transversalen Profils vergrößert teilweise den Abstand zwischen den beiden Laufflächen der Laufrolle bzw. der Kette. Durch das konvexe Profil können punktuelle Überbelastungen effektiv vermieden bzw. verringert werden. Neigt sich die Kette gegenüber den ein oder mehreren Laufrollen, d.h. die Lauffläche der Laufrolle liegt nicht planar auf der Kette auf, so wird aufgrund der konvexen Kontur der Laufflächen eine Art Abrollbewegung erwirkt, wodurch punktuelle Belastungsspitzen, wie beispielsweise beim Aufstehen der seitlichen Laufflächenkante einer konventionellen linearen Laufflächenkontur, verhindert werden.

Besonders zweckmäßig ist es, wenn die Lauffläche der Rollenbahn der Kette am inneren Randbereich des transversalen Profils eine konvexe Kontur und die darauf abrollende Lauffläche der Laufrolle am außen liegenden Randbereich des transversalen Profils eine konvexe Kontur aufweist. Dadurch kann eine optimale Kontaktierung und entsprechende Belastung der Laufflächen während des Arbeitsbetriebs geschaffen werden. Dadurch wird nicht nur bei optimalen Betriebsbedingungen mit einer planar und zentriert auf der jeweiligen Lauffläche der Kette aufliegenden Laufrolle eine optimale gleichmäßige Kraftübertragung erreicht, sondern auch für den Fall, wenn die Laufrolle gegenüber der Kette quer zur Laufrichtung versetzt liegt bzw. geneigt zur Normalen der Kettenlauffläche dreht.

Die konvexe Kontur kann beispielsweise bogenförmig, komplexbogenartig/komplexbogenförmig (also in Form einer komplekenBogenform) sein. Zweckmäßig ist es, wenn die beiden konvexen Flächen der gegenüberliegenden Laufflächen aneinander angepasst sind, d.h. beide bogenförmig, komplexbogenförmig sind.

Besonders bevorzugt ist es, wenn sich das transversale Gesamtprofil der Lauffläche wenigstens einer Laufrolle aus einem konvexen Anteil und einem linearen Anteil zusammensetzt. Das transversale Gesamtprofil entspricht dabei der Gesamtbreite der Lauffläche, d.h. der Flächenanteil, der eine mögliche Kontaktierung während des Fahrbetriebes vorsieht. Der konvexe und/oder lineare Anteil ist vorzugsweise ein zusammenhängender Flächenabschnitt, es können jedoch ebenfalls mehrere lineare und/oder konvexe Anteile vorliegen. Besonders bevorzugt ist es, wenn das Verhältnis zwischen dem linearen und konvexen Anteil gemäß der folgenden Formel bestimmt ist:

$$\frac{1}{10} \cdot R_{Horizontal} < R2_{Horizontal} < \frac{9}{10} \cdot R_{Horizontal}$$

mit

$$R3_{Horizontal} = R_{Horizontal} - R2_{Horizontal},$$

wobei $R_{Horizontal}$ die Länge des transversalen Gesamtprofils, $R2_{Horizontal}$ die Länge des linearen Anteils und $R3_{Horizontal}$ die Länge des konvexen Anteils ist.

Da die transversale Profilfläche nicht mehr eben ist, sondern aufgrund des konvexen Anteils einen Krümmungsbogen beschreibt, ergibt sich ein vertikaler Höhenversatz zwischen den jeweiligen Bereichen des transversalen Profils. Besonders bevorzugt ist es, wenn der maximale Höhenversatz $R3_{Vertikal}$, d.h. der Höhenversatz am außenliegenden Randbereich des konvexen Anteils gegenüber dem linearen Anteil gemäß der folgenden Formel bestimmt ist:

$$\frac{1}{500} \cdot R_{Horizontal} < R3_{Vertikal} < \frac{1}{10} \cdot R_{Horizontal} \cdot$$

In einer besonders bevorzugten Ausgestaltung der Erfindung setzt sich das transversale Gesamtprofil der Lauffläche der Kette ebenfalls aus einem konvexen und linearen Anteil zusammen. Der konvexe und/oder lineare Anteil ist vorzugsweise ein zusammenhängender Flächenabschnitt, es können jedoch ebenfalls mehrere lineare und/oder konvexe Anteile vorliegen. Vorzugsweise gilt

$$P3_{Horizontal} = P_{Horizontal} - P2_{Horizontal},$$

wobei $P3_{Horizontal}$ die Länge des linearen Anteils, $P_{Horizontal}$ die Länge des transversalen Gesamtprofils und $P2_{Horizontal}$ die Länge des konvexen Anteils ist.

Auch bei diesem transversalen Gesamtprofil ist es zweckmäßig, wenn ein randseitiger Bereich des konvexen Anteils einen Höhenversatz gegenüber dem linearen Anteil aufweist, wobei der maximale Höhenversatz $P2_{Vertikal}$ gemäß der folgenden Formel definiert ist:

$$\frac{1}{500} \cdot P_{Horizontal} < P2_{Vertikal} < \frac{1}{10} \cdot P_{Horizontal} \cdot$$

Wie bereits vorstehend erläutert, ist für eine optimale Kraftübertragung eine optimierte Relation der beiden Laufflächen, d.h. der Lauffläche der Kette sowie der Lauffläche der Laufrolle, zweckmäßig. Insbesondere ist dabei vorgesehen, dass die Länge des transversalen Gesamtprofils der Lauffläche der Kette größer oder gleich der Länge des transversalen Gesamtprofils der Lauffläche der Laufrolle ist. Weiterhin vorzugsweise ist der konvexe Anteil der Kette längenmäßig kleiner oder gleich der Länge des konvexen Anteils der Laufrolle.

Idealerweise umfasst die Kette zwei parallel verlaufende Rollenbahnen, auf denen Gegenlaufflächen der Laufrolle abrollen. Zweckmäßig ist es, dass die parallel verlaufenden Rollenbahnen der Kette bzw. eines einzelnen Kettengliedes symmetrisch zur Mittelachse ausgestaltet sind.

In einer besonders bevorzugten Ausgestaltung der Erfindung umfasst die wenigstens eine Laufrolle einen Mittelbund, der als Führungsrad zur Führung der Laufrolle auf der Kette dient, vorzugsweise läuft der Mittelbund in einer vorgesehenen Ausnehmung, die sich in Laufrichtung über die gesamte Kette erstreckt. Die Seitenflanken des Mittelbundes bieten ausreichend Seitenhalt zur Führung des Laufrades auf der Kette. Besonders bevorzugt ist es, wenn die Seitenflanken des Mittelbundes nicht linear sondern nicht eindeutig (modifiziert) sind, um den ketten- und/oder laufrollenseitigen Verschleiß weiter einzugrenzen. Die geeignete Wahl der Neigungswinkel erleichtert das Einführen des Mittelbundes in die Ausnehmung der Kette, falls im Betrieb ein vollständiges Abheben der Kette von der Laufrolle eintreten sollte.

Es kann vorgesehen sein, dass die Seitenflanken des Mittelbundes zumindest abschnittsweise in Radialrichtung konvex ausgeführt sind bzw. durch einen konvexen Konturverlauf gekennzeichnet sind. Idealerweise weist das Flankenprofil in Radialrichtung eine alternierend lineare und konvexe Kontur auf. Weiterhin ist es denkbar, dass sich die konvexen Anteile der Kontur untereinander durch abweichende Radien ihres Bogenverlaufs auszeichnen.

Besonders bevorzugt ist es, wenn die der Seitenflanke des Mittelbundes gegenüberliegende Seitenwand der Kettenausnehmung zumindest abschnittsweise ebenfalls eine konvexe Kontur aufweist. Insbesondere setzt sich die Seitenwand der Ausnehmung aus einem linearen Anteil und einem konvexen Anteil zusammen.

Vorstellbar ist es ebenfalls, wenn die Seitenflanken des Mittelbundes wenigstens zwei lineare Abschnitte umfassen, die durch wenigstens einen konvexen Teil voneinander getrennt sind. Denkbar ist es in diesem Fall, dass die beiden linearen Anteile unterschiedliche Neigungswinkel gegenüber der Vertikalen aufweisen, vorzugsweise im Bereich zwischen 0° und 50° bzw. im Bereich zwischen 0° und 30°. Idealerweise ist ein näher an der Mittelbundkuppe liegender linearer Anteil stärker gegenüber der Vertikalen geneigt als ein in Radialrichtung der Laufrolle weiter innen liegender linearer Anteil. Der Neigungswinkel des am nächsten zur Mittelbundkuppe liegenden linearen Anteils liegt vorteilhafterweise im Winkelbereich zwischen 0° und 50°.

Des Weiteren ist vorstellbar, dass der lineare Anteil der Seitenwand der Ausnehmung der Ketten gegenüber der Vertikalen geneigt ist, insbesondere wird hierbei ein Winkel gewählt, der betragsmäßig im Winkelbereich zwischen den Winkeln der beiden geneigten Linearanteile der Seitenflanke der Laufrolle liegt. Idealerweise ist der Winkel identisch zu, Neigungswinkel des gegenüberliegenden linearen Anteils der Seitenflanke des Mittelbundes gewählt.

Gemäß einer alternativen Ausführung kann vorgesehen sein, dass sich wenigstens eine Lauffläche der Kette in transversaler Richtung in mehrere Segmente mit jeweils wenigstens einem linearen Anteil unterteilt, wobei sich vorzugsweise beidseitig an den linearen Anteil konvexe Anteile anschließen. Die in mehrere Segmente unterteilte Lauffläche ist als eine Lauffläche zu verstehen, auf der genau eine Lauffläche der Laufrollen abrollt.

Neben dem erfindungsgemäßen Kettenfahrwerk umfasst die vorliegende Erfindung ebenfalls eine Arbeitsmaschine, insbesondere einen Raupenbagger bzw. einen Raupenkran, mit einem Kettenfahrwerk gemäß der vorliegenden Erfindung bzw. einer vorteilhaften Ausgestaltung der Erfindung. Dabei ergeben sich offensichtlich dieselben Vorteile und Eigenschaften für die erfindungsgemäße Arbeitsmaschine, weshalb an dieser Stelle auf eine wiederholende Beschreibung verzichtet wird. Weitere Vorteile und Eigenschaften der Erfindung sollen im Folgenden anhand eines in den Zeichnungen dargestellten Ausführungsbeispiels näher erläutert werden. Es zeigen:

Fig. 1:     eine Seitenansicht des erfindungsgemäßen Kettenfahrwerks,

Fig. 2:     eine Schnittdarstellung durch das Kettenfahrwerk der Figur 1 im Bereich der Kontaktfläche zwischen Laufrolle und Kettenglied,

Fig. 3:     eine Konturskizzierung der Laufflächen des Laufrades und der Kette,

Fig. 4:     eine Skizzierung der Laufflächenkontur der Kette,

Fig. 5:     eine Skizzierung der Laufflächenkontur der Laufrolle,

Fig. 6:     diverse Skizzierungen der Laufflächenkonturen während unterschiedlicher Betriebsbedingungen,

Fig. 7:     einen Überblick über mögliche Kettenkonstruktionen eines Kettenfahrwerks und

Figur 8:     ein alternatives Ausführungsbeispiel eines Kettengliedes mit geteilten Laufflächen.

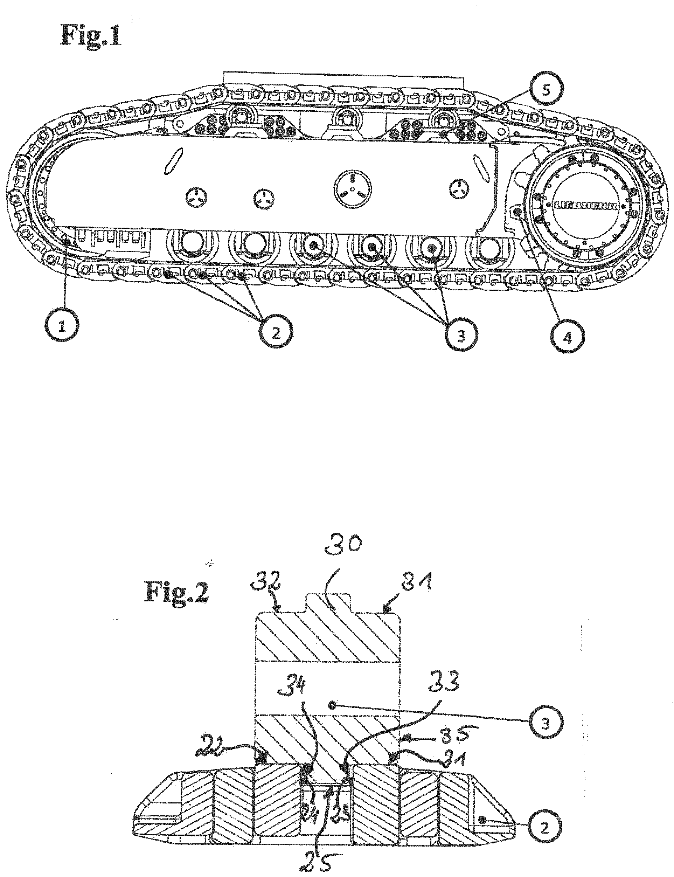

Figur 1 zeigt eine Seitenansicht des erfindungsgemäßen Raupenantriebes für eine Erdbewegungsmaschine bzw. einen Raupenkran. Der gezeigte Raupenantrieb ist am Unterwagen der Arbeitsmaschine befestigt und dient zur Fortbewegung der Maschine.

Die Fahrwerkskonstruktion umfasst ein angetriebenes Turasrad 4, das über einen am Unterwagen montierten und geeigneten Antrieb zur Fortbewegung angetrieben wird. Am in der Darstellung linken Ende des Raupenantriebs befindet sich das Leitrad 1, über dessen Umfang die Raupenkette läuft. Das Leitrad 1 sorgt für eine ausreichende Spannung der Kette, was durch die bewegliche Lagerung des Leitrade 1 am Unterwagen erreicht wird. Die Raupenkette läuft auf den an der Oberkante des Oberwagens montierten Tragrollen 5, um die Kette ausreichend zu stützen und eine Durchhängen zu vermeiden.

In Bodennähe entlang der Aufstandsfläche sind insgesamt sechs Laufrollen 3 vorgesehen, um das Maschinengewicht,. Belastungen (z.B. Ausrüstungskräfte) bzw. den Anpressdruck gleichmäßig über die Aufstandsfläche in den Boden einzuleiten. Im gezeigten Ausführungsbeispiel sind die Laufrollen 3 gleichmäßig beabstandet zwischen dem Turasrad 4 und dem Leitrad 1 befestigt, Abweichungen in der Anzahl als auch bzgl. des Abstandes der Laufrollen 3 zueinander sind ohne weiteres denkbar. Die Raupenkette setzt sich aus einzelnen Kettengliedern 2 zusammen, die über Bolzenverbindungen gelenkig miteinander verbolzt sind.

Figur 2 zeigt eine Schnittdarstellung einer einzelnen Laufrolle 3 quer zur Laufrichtung, die auf einem Kettenglied 2 abrollt. Erkennbar sind zwei separate Lauffläche 31, 32 der Laufrolle 3 mit gleichem Durchmesser und identischer Flächenbreite. Beide Laufflächen 31, 32 laufen bei der Fahrzeugfortbewegung über die Innenseite der einzelnen Kettenglieder 2, werden also von definierten Lauffläche 21, 22 auf der Innenseite der Kettenglieder 2 getragen.

Der Mittelbund 30 der Laufrolle 3 dient zur Ausprägung eines Führungsrades mit gegenüber den Laufflächen 31, 32 vergrößertem Durchmesser. Der Mittelbund greift in die in Längsrichtung durchgehende Ausnehmung 25 des Kettengliedes 2 ein und gewährleistet mittels seiner Seitenflanken 33, 34, die an den Seitenwänden 23, 24 der Ausnehmung 25 anschlagen, eine ausreichende Führung des Laufrades 3 auf der Kette.

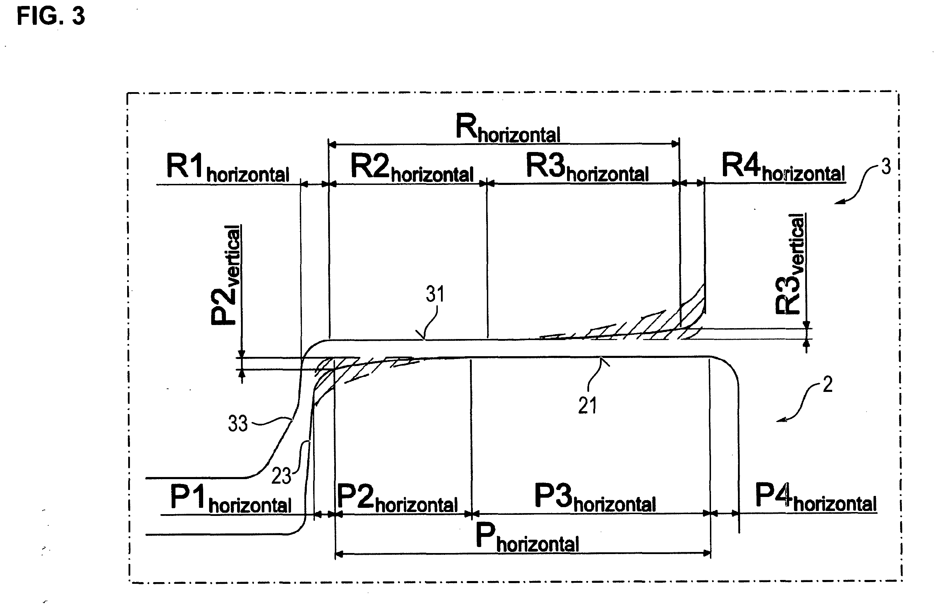

Die vorliegende Erfindung beschreibt nunmehr eine geeignete Modifikation der Laufflächenprofile sowie optional der Flanken 33, 34 bzw. Seitenwandkonturen 23, 24 um auftretende Belastungen für Kette und Laufrollen 3 möglichst zu minimieren. Die Modifikation der Laufflächenkonturen soll im Folgenden anhand der Darstellung in Figur 3 erläutert werden, die einen Teil der rechten Lauffläche 31 der Laufrolle 3 sowie die zugeordnete Lauffläche 21 des Kettengliedes 2 skizziert.

Das transversale Profil des Kettengliedes 2, d.h. die Gesamtbreite der Lauffläche 21 quer zur Laufrichtung, wird im Folgenden als $P_{Horizontal}$ bezeichnet. Diese Lauffläche unterteilt sich in einen linearen Anteil $P3_{Horizontal}$, d.h. ein Anteil mit einer geradlinigen Oberflächenkontur, sowie einen konvexen Anteil $P2_{Horizontal}$, d.h. einen Anteil mit einem konvexen Konturverlauf. Der konvexe Anteil $P2_{Horizontal}$ nimmt den linken Randbereich der gesamten Lauffläche $P_{Horizontal}$ ein und grenzt folglich an die Ausnehmung 25 an. Die resultierende Lauffläche 21, d.h. die Gesamtbreite des transversalen Profils $P_{Horizontal}$ entspricht folglich der Summe aus linearem und konvexem Anteil $P2_{Horizontal} + P3_{Horizontal}$.

Erkennbar ist weiterhin, dass sich auf Grund des konvexen Anteils $P2_{Horizontal}$ ein Höhenversatz der Lauffläche gegenüber dem linearen Anteil $P3_{Horizontal}$ ergibt, der einen Wert von $P2_{Vertikal}$ einnimmt. Der Maximalwert $P2_{Vertikal}$ liegt folglich am inneren Ende des konvexen Anteils $P2_{Horizontal}$ vor. Der Übergang des transversalen Profils $P_{Horizontal}$ in die Seitenwand 23 erfolgt über eine gerundete Ecke mit einem konstanten Radius, deren transversale Länge mit $P1_{Horizontal}$ bezeichnet ist. Dasselbe gilt für die Außenkante der Lauffläche 21 mit der transversalen Länge $P4_{Horizontal}$. Die Bereiche $P4_{Horizontal}$ und $P1_{Horizontal}$ können alternativ auch konvex, insbesondere bogenförmig oder korbbodenartig ausgestaltet sein. Der schraffierte Bereich gibt den zulässigen Radiusbereich des konvexen Anteils $P2_{Horizontal}$ wieder. Der konvexe Anteil $P2_{Horizontal}$ kann einen konstanten Radius umfassen, komplexförmig/bogenförmig geformt sein.

Figur 3 zeigt weiterhin das Konturprofil der auf der beschriebenen Lauffläche abrollenden Lauffläche 31 der Laufrolle 3. Auch dieses transversale Profil $R_{Horizontal}$ setzt sich aus einem linearen Anteil $R2_{Horizontal}$ und einem konvexen Anteil $R3_{Horizontal}$ zusammen. Hierbei ist der konvexe Anteil am äußeren Randbereich des transversalen Profils $R_{Horizontal}$ vorgesehen. Der ebenfalls resultierende Höhenversatz des transversalen Profils wird mit dem Wert $R3_{Vertikal}$ bezeichnet, der am äußeren Endbereich des konvexen Profils $R3_{Horizontal}$ gemessen wird. Wie beim Kettenglied 2 ist auch hier der Übergang zur äußeren Seitenflanke 35 gerundet ausgeführt, die transversale Länge der Rundung wird als $R4_{Horizontal}$ bezeichnet. Der Übergang des linearen Anteils $R2_{Horizontal}$ zur Seitenflanke 33 des Mittelbundes erfolgt mit konstantem Radius, wobei die transversale Länge des Übergangs mit $R1_{Horizontal}$ gekennzeichnet ist. Die parallelen Laufflächen 22, 32 sind achssymmetrisch. Die Bereiche $R4_{Horizontal}$ und $R1_{Horizontal}$ können alternativ auch konvex, insbesondere bogenförmig oder komplex bogenförmig ausgestaltet sein. Der schraffierte Bereich gibt den zulässigen Radiusbereich des konvexen Anteils $R3_{Horizontal}$ wieder. Der konvexe Anteil $R3_{Horizontal}$ kann einen konstanten Radius umfassen, komplexförmig/bogenförmig geformt sein. Die Laufrolle ist vorzugsweise achssymmetrisch, zumindest hinsichtlich der Ausgestaltung des Mittelbundes 30 und der Laufflächen 31, 32.

Die Dimensionierung der Linear- bzw. Konvexanteile der jeweiligen Laufflächen 21, 22, 31, 32 wird mit den folgenden Formeln festgelegt:

$$\frac{1}{10} \cdot R_{Horizontal} < R2_{Horizontal} < \frac{9}{10} \cdot R_{Horizontal}$$

$$R3_{Horizontal} = R_{Horizontal} - R2_{Horizontal}$$

$$\frac{1}{500} \cdot R_{Horizontal} < R3_{Vertikal} < \frac{1}{10} \cdot R_{Horizontal}$$

$$P_{Horizontal} \geq R_{Horizontal}$$

$$P2_{Horizontal} \leq R2_{Horizontal}$$

$$P3_{Horizontal} = P_{Horizontal} - P2_{Horizontal}$$

$$\frac{1}{500} \cdot P_{Horizontal} < P2_{Vertikal} < \frac{1}{10} \cdot P_{Horizontal}$$

$$R1_{Horizontal} \leq 20mm$$

$$R4_{Horizontal} \leq 20mm$$

$$P1_{Horizontal} \leq 20mm$$

$$P4_{Horizontal} \leq 20mm$$

Gemäß der vorliegenden Erfindung sollen jedoch nicht nur die Laufflächen 21, 22, 31, 32 modifiziert werden, sondern auch die Kontur des Mittelbundes 30 der Laufrolle 3 sowie der entsprechenden Ausnehmung 25 des Kettengliedes 2.

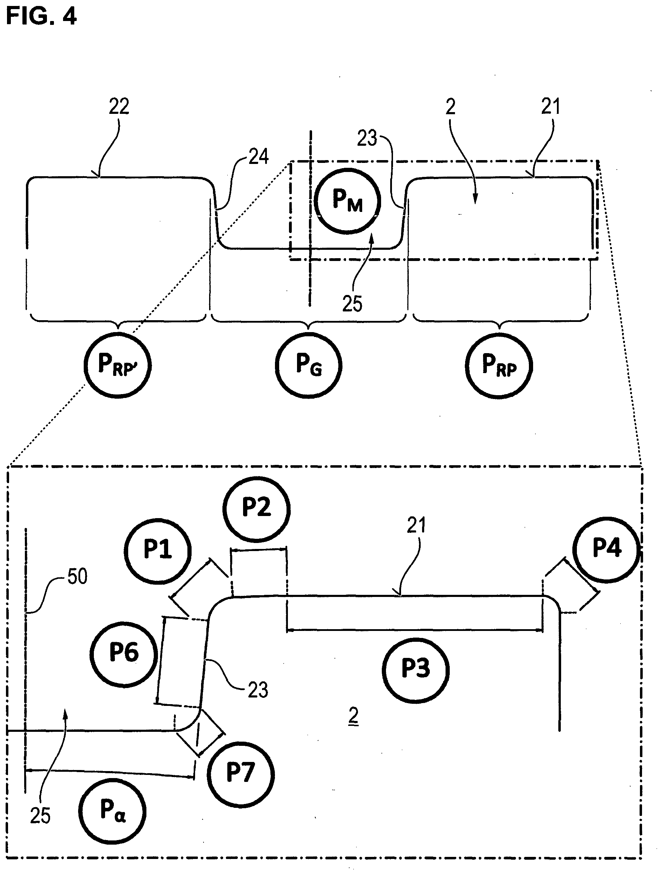

Die konkrete Formgebung der Seitenflanke der Ausnehmung 25 ist der Figur 4 zu entnehmen. Der Einfachheit halber wurde der Index "Horizontal" in der Figurendarstellung weggelassen. Hierbei ist erkennbar, dass sich an den Übergangsbereich P1 des konvexen Anteils P2 zur Seitenwand 23 ein linearer Anteil P6 anschließt, der über den gekrümmten Bereich in den Boden der Ausnehmung 25 mündet. Der Bereich P7 kann ebenfalls eine Kurve mit konstantem Radius oder komplex bogenförmigausgestaltet sein. Der Linearanteil P6 ist gegenüber der Vertikalen 50 im Winkel $P_\alpha$ geneigt.

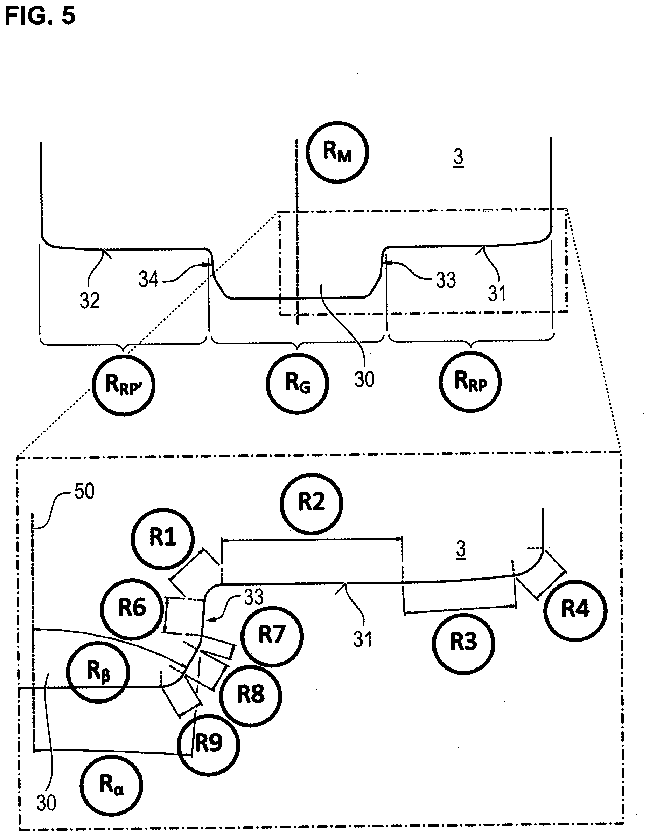

Die Seitenflanke 33 des Mittelbunds 30 der Laufrolle 3 ist in Figur 5 dargestellt. Der lineare Anteil R2 der Lauffläche 3 geht über die gerundete Ecke R1 in einen linearen Anteil R6 der Seitenflanke 33 des Mittelbundes 30 über. An den linearen Anteil R6 schließt sich ein erster konvexer Anteil R7 an, der wieder in einen linearen Anteil R8 übergeht und schlussendlich in dem konvexen Anteil R9 endet, der unmittelbar an die Kuppe des Mittelbundes 30 angrenzt. Die konvexen Bereiche R6, R8 können einen konstanten Krümmungsradius aufweisen oder auch komplex bogenförmigausgestaltet sein.

Erkennbar ist weiterhin, dass die linearen Anteile R6, R8 unterschiedliche Neigungswinkel $R_\beta$, $R_\alpha$ gegenüber einer Vertikalen 50 einnehmen. Der Neigungswinkel $R_\alpha$ des linearen Anteils R6 ist kleiner gewählt als der Neigungswinkel $R_\beta$ des linearen Anteils R8. Vorschriften für die Dimensionierung der entsprechenden Neigungswinkel werden wie folgt festgelegt:

$$0° < R_\alpha < 30°$$

$$0° < R_\beta < 50°$$

Der Neigungswinkel $P_\alpha$ des Seitenteils 23 des Kettengliedes 2 wird üblicherweise betragsgleich dem Neigungswinkel $R_\alpha$ der Laufrolle 3 dimensioniert.

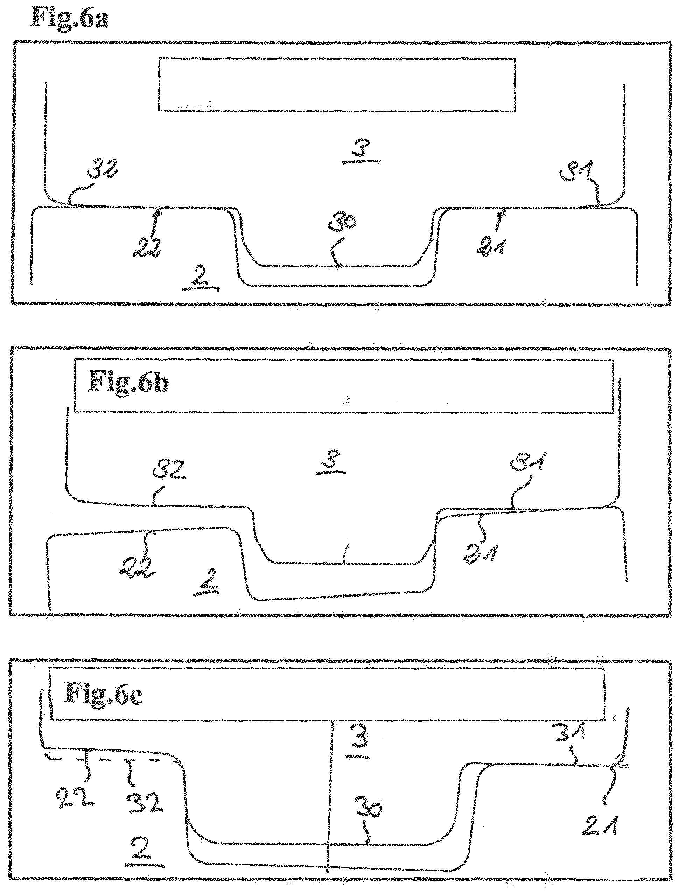

Die vorteilhaften charakteristischen Betriebseigenschaften der modifizierten Kontur der Laufrolle 3 sowie des Kettengliedes 2 sollen anhand der Figurendarstellungen 6a, 6b, 6c nähergebracht werden. Die Darstellung der Figur 6a zeigt einen Querschnitt durch die Kontaktfläche des Laufrades 3 und des Kettengliedes 2. Die Laufrolle 3 liegt dabei zentral auf dem Kettenglied 2 auf, d.h. der Mittelbund 30 greift zentral in die Ausnehmung 25 ein.

Die nachfolgenden Ausführungen werden am Beispiel der Laufflächen 21, 31 gemacht, gelten aufgrund der achssymmetrischen Ausführung des Kettengliedes 2 bzw. der Laufrolle 3 gleichermaßen für die Laufflächen 22, 32. Die Hauptkontaktfläche zwischen Laufrolle 3 und Kettenglied 2 wird durch die Kontaktierung beider linearen Anteile R2, P3 erzielt. Durch die konvexen Anteile R3, P2 wird der Abstand zwischen beiden Laufflächen in diesen Bereichen vergrößert. Dadurch ergibt sich eine optimale Kontaktfläche zwischen beiden Komponenten, die einen optimalen Kraftfluss erlaubt. Das Auftreten von punktuellen Belastungsspitzen kann konsequent vermieden werden.

Figur 6b zeigt eine Betriebssituation, in der die Laufrolle 3 seitlich versetzt auf dem Kettenglied 2 aufliegt. Dadurch liegt die rechte Seitenflanke 33 des Mittelbundes 30 an der Seitenwand 23 der Ausnehmung 25 an. Ferner wird durch äußere Einflüsse die Kette auf der in der Zeichnung dargestellte rechten Seite nach oben gedrückt, so dass die Laufrolle 3 schräg auf der Kette läuft und die linke Lauffläche 32 von der Lauffläche 22 des Kettengliedes abhebt. Aufgrund der erfindungsgemäßen Konturmodifikation mit den konvexen Anteilen P2, R3 kann die Lauffläche 31 auf der Lauffläche 21 nach rechts abrollen ohne das es zu Belastungsspitzen auf die Lauffläche 21 kommt. Der konvexe Anteil R3 kontaktiert den linearen Anteil P3 des Kettengliedes 2. Die konkrete Dimensionierung des konvexen Anteils R3 ist dabei so gewählt, das der resultierende Anpressdruck den regulären Anpressdruck der Betriebssituation gemäß Figur 6a nicht oder nur geringfügig übersteigt.

In Figur 6c ist der Mittelbund 30 nach links verschoben und die Kette wird wegen der Beschaffenheit am Einsatzort auf der linken Seite nach oben in Richtung der Laufrolle 3 gedrückt. Auch hier sorgt die konvexe Kontur der beiden Laufflächen 21, 31 für eine gleichmäßigen Belastung und Kontaktierung, die Laufrolle steht mittels des linearen Anteils R2 mit dem konvexen Anteil P2 des Kettengliedes 2 in Kontakt.

Während des Arbeitsbetriebs kann die Laufrolle 3 gegebenenfalls vollständig den Kontakt zum Kettenglied 2 verlieren. Die konkrete Ausgestaltung des Bereichs R8, insbesondere der spitzere Zulauf des Mittelbundes 30 aufgrund des größeren Neigungswinkels $R_\beta$ des Mittelbundes 30 erlaubt einen zuverlässigen Neueingriff des Mittelbundes 30 in die Ausnehmung 25. Zu Beginn des Eingriffs kontaktier der Bereich R8 den Bereich P1 des Kettengliedes.

Ein weiterer Vorteil der Ausführung gemäß der Erfindung besteht darin, dass die linearen Anteile P6 und R6 des Kettengliedes 2 bzw. der Laufrolle 3 parallel zueinander sind und somit einen flächigen Kontakt zwischen Mittelbund und Seitenwand der Ausnehmung 25 zulassen. Dadurch kann der auftretende Verschließ in diesem Bereich weiter eingegrenzt werden.

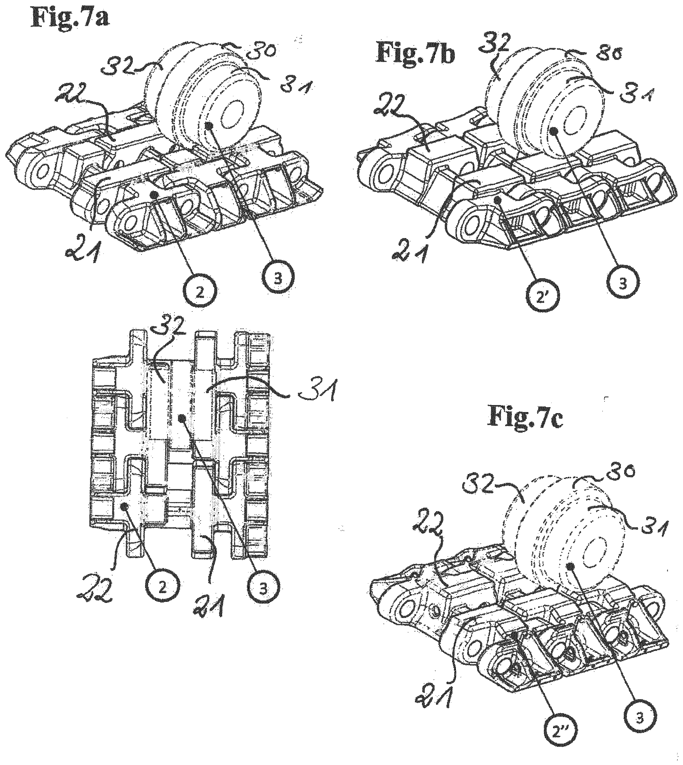

Figur 7 zeigt unterschiedliche Kettenkonstruktionen, bei denen die parallel verlaufenden Rollenbahnen 21, 22 in unterschiedlicher Weise aus einzelnen Kettenglieder 2 zusammengesetzt sind. Figur 7a zeigt einen asymmetrischen Aufbau der Rollenbahnen eines einzelnen Kettengliedes 2. Dadurch wird erreicht, dass die Übergangsspalte zwischen einzelnen Kettenglieder 2 in Längsrichtung versetzt liegen, um Erschütterungen während dem Abrollen des Laufrades 3 zu verringern. Figur 7b zeigt einen symmetrischen Aufbau mit symmetrischen bzw. identischen Kettengliedern 2. Die Variante der Figur 7c zeigt eine leichte Abwandlung gegenüber dem symmetrischen Aufbau der Figur 7b. Hierbei sind die einzelnen Laufflächen 21, 22 eines einzelnen Kettengliedes zwar identisch aufgebaut, jedoch in Laufrichtung leicht versetzt, um die vorgenannten Vorteile des asymmetrischen Aufbaus zu verwirklichen. Für alle Varianten der Figuren 6a bis 6c kann jedoch mittels der erfindungsgemäßen Konturmodifikation der resultierende Verschleiß an den Kettengliedern 2 deutlich reduziert werden.

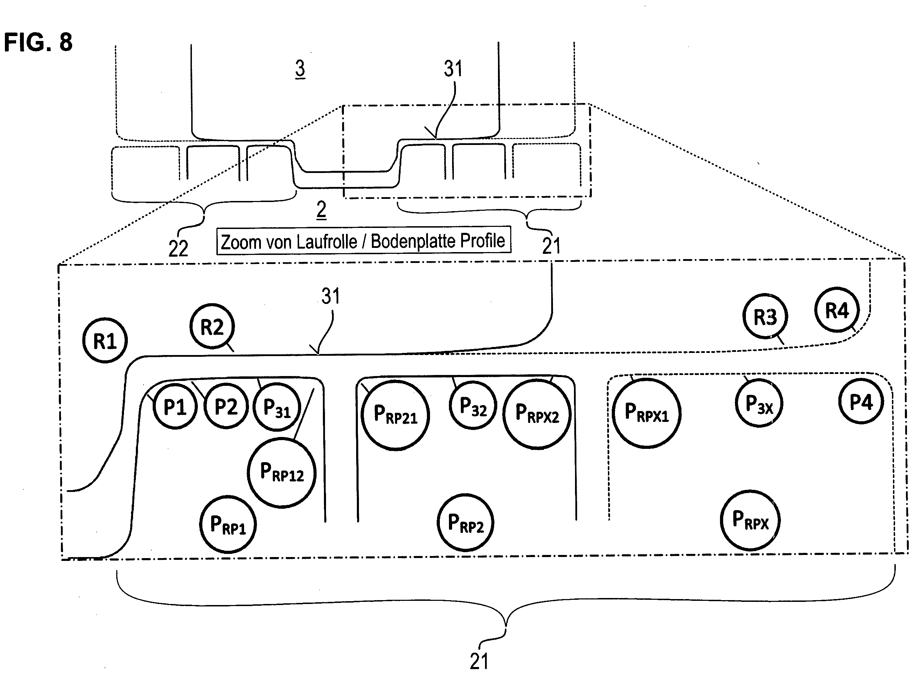

Figur 8 zeigt ein weiteres Ausführungsbeispiel, dessen Lauffläche in zwei oder mehr Laufflächensegmente $P_{RP1}$ bis $P_{RPX}$ unterteilt ist. Die Laufffläche 31 der Laufrolle 3 rollt dann gleichzeitig auf zwei bzw. mehr Rollenbahnen $P_{RP1}$, $P_{RP2}$, $P_{RPX}$ ab. Der lineare Anteil der Lauffläche 21 unterteilt sich in diesem Fall auf lineare Anteile $P_{31}$, $P_{32}$, $P_{3X}$ der Laufflächensegmente $P_{RP1}$ bis $P_{RPX}$. Auf beiden Seiten der linearen Anteile eines Laufflächensegmentes schließen sich konvexe Anteile $P_2$, $P_{RP12}$, $P_{RP21}$,..., $P_{RPX2}$, $P_{RPX1}$, $P_4$ an.

## Patentansprüche

1. Kettenfahrwerk für eine Arbeitsmaschine mit einer Kette, die wenigstens eine Rollenbahn, insbesondere zwei parallel verlaufende Rollenbahnen, umfasst, auf deren Lauffläche (21, 22) während des Raupenbetriebes wenigstens eine Laufrolle (3) des Kettenfahrwerks bewegbar ist,
**dadurch gekennzeichnet,**
**dass** die Laufflächen (21, 22) wenigstens einer Rollenbahn der Kette ein transversales Profil mit konvexer Kontur am inneren Randbereich und linearer Kontur am sich daran anschließenden außen liegenden Randbereich und die darauf abrollende Lauffläche (31, 32) wenigstens einer Laufrolle (3) ein transversales Profil mit konvexer Kontur am außen liegenden Randbereich und linearer Kontur am sich daran anschließenden inneren Randbereich aufweisen, wobei der konvexe Laufflächenkonturbereich der Rollenbahn dem linearen Laufflächenkonturbereich der Laufrolle (3) gegenüber liegt und der konvexe Laufflächenkonturbereich der Laufrolle (3) dem linearen Laufflächenkonturbereich der Rollenbahn gegenüber liegt und wobei die Hauptkontaktfläche zwischen der Lauffläche (31, 32) der Laufrolle (3) und der Lauffläche (21, 22) der Rollenbahn durch die Kontaktierung der linearen Konturbereiche erzielt wird.

**2.** Kettenfahrwerk nach Anspruch 1, **dadurch gekennzeichnet, dass** die konvexe Kontur des Laufrades (3) und/oder der Kette bogenförmig und/oder komplex bogenförmig ist.

**3.** Kettenfahrwerk nach einem der vorhergehenden Ansprüche, **dadurch gekennzeichnet, dass** sich die Länge $R_{\text{Horizontal}}$ des transversalen Profils der abrollenden Fläche (31, 32) wenigstens einer Laufrolle (3) aus einem linearen Anteil $R2_{Horizontal}$ und einem konvexen Anteil $R3_{Horizontal}$ zusammensetzt, wobei gilt:

$$\frac{1}{10} \cdot R_{Horizontal} < R2_{Horizontal} < \frac{9}{10} \cdot R_{Horizontal}$$

mit

$$R3_{Horizontal} = R_{Horizontal} - R2_{Horizontal}.$$

**4.** Kettenfahrwerk nach Anspruch 3, **dadurch gekennzeichnet, dass** durch die konvexe Kontur des konvexen Anteils $R3_{Horizontal}$ ein randseitiger Höhenversatz $R3_{Vertikal}$ des transversalen Profils $R_{\text{Horizontal}}$ gegenüber der linearen Kontur $R2_{Horizontal}$ des transversalen Profils $R_{\text{Horizontal}}$ ergibt, wobei gilt:

$$\frac{1}{500} \cdot R_{Horizontal} < R3_{Vertikal} < \frac{1}{10} \cdot R_{Horizontal} \cdot$$

**5.** Kettenfahrwerk nach einem der vorhergehenden Ansprüche, **dadurch gekennzeichnet, dass** sich die Länge $P_{Horizontal}$ des transversalen Profils wenigstens einer Lauffläche (21, 22) der Kette aus einem linearen Anteil $P3_{Horizontal}$ und einem konvexen Anteil $P2_{Horizontal}$ zusammensetzt, wobei gilt:

$$P3_{Horizontal} = P_{Horizontal} - P2_{Horizontal}.$$

**6.** Kettenfahrwerk nach Anspruch 6, **dadurch gekennzeichnet, dass** durch die konvexe Kontur des konvexen Anteils $P2_{Horizontal}$ ein randseitiger Höhenversatz $P2_{Vertikal}$ des transversalen Profils $P_{Horizontal}$ gegenüber der linearen Kontur $P3_{Horizontal}$ des transversalen Profils $P_{Horizontal}$ ergibt, wobei gilt:

$$\frac{1}{500} \cdot P_{Horizontal} < P2_{Vertikal} < \frac{1}{10} \cdot P_{Horizontal} \cdot$$

**7.** Kettenfahrwerk nach einem der vorhergehenden Ansprüche 6 oder 7, **dadurch gekennzeichnet, dass** für die Relationen der Lauffläche (21, 22) der Kette und der abrollenden Lauffläche (31, 32) der Laufrolle (3) folgendes gilt:

$$P_{Horizontal} \geq R_{Horizontal,}$$

$$P2_{Horizontal} \leq R2_{Horizontal,}$$

**8.** Kettenfahrwerk nach einem der vorhergehenden Ansprüche, **dadurch gekennzeichnet, dass** sich wenigstens eine Lauffläche (21, 22) der Kette in transversaler Richtung in mehrere Laufflächensegmente mit linearem Anteil unterteilt, wobei sich vorzugsweise beidseitig an den linearen Anteilen konvexe Anteile anschließen.

**9.** Kettenfahrwerk nach einem der vorhergehenden Ansprüche, **dadurch gekennzeichnet, dass** die wenigstens eine Laufrolle (3) einen Mittelbund (30) zur Führung der Laufrolle (3) auf der Kette umfasst, wobei die Seitenflanken (33, 34) des Mittelbundes (30) zumindest abschnittsweise in Radialrichtung eine konvexe Kontur aufweisen.

**10.** Kettenfahrwerk nach Anspruch 9, **dadurch gekennzeichnet, dass** das Flankenprofil (33, 34) in Radialrichtung eine linear und konvex alternierende Kontur aufweist.

**11.** Kettenfahrwerk nach Anspruch 10, **dadurch gekennzeichnet, dass** die Seitenflanke (33, 34) wenigstens zwei lineare Abschnitte umfasst, die durch wenigstens einen konvexen Teil getrennt sind, wobei die linearen Anteile vorzugsweise unterschiedliche Neigungswinkel gegenüber der Vertikalen aufweisen, vorzugsweise zwischen 0° und 50° bzw. 0° und 30°, wobei idealerweise der näher an der Mittelbundkuppe liegende lineare Anteil eine stärkere Neigung aufweist.

**12.** Kettenfahrwerk nach Anspruch 9 bis 11, **dadurch gekennzeichnet, dass** die gegenüberliegende Seitenwand (23, 24) der den Mittelbund (30) aufnehmenden Ausnehmung (25) der Kette zumindest abschnittsweise eine konvexe Kontur, insbesondere aus einem linearen Anteil und einem konvexen Anteil zusammengesetzt ist.

**13.** Kettenfahrwerk nach Anspruch 12, **dadurch gekennzeichnet, dass** der lineare Anteil der Seitenwand (23, 24) der Ausnehmung (25) gegenüber der Vertikalen geneigt ist, insbesondere in identischem Winkel zum gegenüberliegenden linearen Anteil der Seitenflanke (33, 34) des Mittelbundes (30).

**14.** Arbeitsmaschine, insbesondere Raupenbagger oder Raupenkran, mit einem Kettenfahrwerk nach einem der vorhergehenden Ansprüche.

**Claims**

**1.** A tracked chassis for a work machine having a track which comprises at least one roller path, in particular two roller paths extending in parallel, on the running surface (21, 22) of which at least one roller (3) of the tracked chassis is movable during crawler operation,
**characterized in that**
the running surfaces (21, 22) of at least one roller path of the track have a transverse section with a convex contour at the inner marginal region and with a linear contour at the outwardly disposed marginal region adjoining it, and the running surface (31, 32) of at least one roller (3) running off thereon has a transverse section with a convex contour at the outwardly disposed marginal region und with a linear contour at the inner marginal region adjoining it, wherein the convex contour region of the running surface of the roller track is located opposite the linear contour region of the running surface of the roller (3), and the convex contour region of the running surfaces of the roller (3) is located opposite the linear contour region of the running surfaces, and wherein the main contact surface between the running surface (31, 32) of the roller (3) and the running surface (21, 22) of the roller track is achieved by the contacting of the linear contour regions.

**2.** A tracked chassis in accordance with claim 1, **characterized in that** the convex contour of the roller (3) and/or of the track is arcuate and/or complex arcuate.

**3.** A tracked chassis in accordance with one of the preceding claims, **characterized in that** the length $R_{Horizontal}$ of the transverse section of the surface (31, 32) of at least one roller (3) rolling off is composed of a linear portion $R2_{Horizontal}$ and a convex portion $R3_{Horizontal}$, where it applies:

$$\frac{1}{10} \cdot R_{Horizontal} < R2_{Horizontal} < \frac{9}{10} \cdot R_{Horizontal}$$

where

$$R3_{Horizontal} = R_{Horizontal} - R2_{Horizontal}.$$

4. A tracked chassis in accordance with claim 3, **characterized in that** due to the convex contour of the convex portion $R3_{Horizontal}$, a height offset $R3_{vertical}$ of the transverse section $R_{Horizontal}$ at the margin side results with respect to the linear contour $R2_{Horizontal}$ of the transverse section $R_{Horizontal}$, where it applies:

$$\frac{1}{500} \cdot R_{Horizontal} < R3_{Vertikal} < \frac{1}{10} \cdot R_{Horizontal} \ .$$

5. A tracked chassis in accordance with one of the preceding claims, **characterized in that** the length $P_{Horizontal}$ of the transverse section of at least one running surface (21, 22) of the track is composed of a linear portion $P3_{Horizontal}$ and a convex portion $P2_{Horizontal}$, where it applies:

$$P3_{Horizontal} = P_{Horizontal} - P2_{Horizontal}.$$

6. A tracked chassis in accordance with claim 6, **characterized in that** due to the convex contour of the convex portion $P2_{Horizontal}$ , a height offset $P2_{Vertical}$ of the transverse section $P_{Horizontal}$ at the margin side results with respect to the linear contour $P3_{Horizontal}$ of the transverse section $P_{Horizontal}$, where it applies:

$$\frac{1}{500} \cdot P_{Horizontal} < P2_{Vertical} < \frac{1}{10} \cdot P_{Horizontal} \ .$$

7. A tracked chassis in accordance with one of the preceding claims 6 or 7, **characterized in that** the following applies to the relationships of the running surface (21, 22) of the track and of the running surface (31, 32) of the roller (3) rolling off:

$$P_{Horizontal} \geq R_{Horizontal,}$$

$$P2_{Horizontal} \leq R2_{Horizontal,}$$

8. A tracked chassis in accordance with one of the preceding claims, **characterized in that** at least one running surface (21, 22) of the track is divided into a plurality of running surface segments having a linear portion in the transverse direction, with convex portions preferably adjoining the linear portions at both sides.

9. A tracked chassis in accordance with one of the preceding claims, **characterized in that** the at least one roller (3) comprises a center flange (30) for guiding the roller (3) on the track, with the side flanks (33, 34) of the center flange (30) having a convex contour at least sectionally in the radial direction.

10. A tracked chassis in accordance with claim 9, **characterized in that** the flank section (33, 34) has a contour alternating linearly and convexly in the radial direction.

11. A tracked chassis in accordance with claim 10, **characterized in that** the side flank (33, 34) comprises at least two linear sections which are separated by at least one convex part, with the linear portions preferably having different angles of inclination with respect to the vertical, preferably between 0° and 50° or 0° and 30°, with the linear portion disposed closer to the center flange dome ideally having a greater inclination.

12. A tracked chassis in accordance with claim 9 to claim 11, **characterized in that** the oppositely disposed side wall (23, 24) of the recess (25) of the track receiving the center flange (30) has a convex contour at least sectionally and is in particular composed of a linear portion and a convex portion.

13. A tracked chassis in accordance with claim 2 **characterized in that** the linear portion of the side wall (23, 24) of the recess (25) is inclined with respect to the vertical, in particular at an identical angle to the oppositely disposed linear portion of the side flank (33, 34) of the center flange (30).

**14.** A work machine, in particular a crawler excavator or a crawler-mounted crane, having a tracked chassis in accordance with one of the preceding claims.

**Revendications**

**1.** Châssis à chenilles pour une machine de travail comprenant une chenille, qui comprend au moins un rail à galets, en particulier deux rails à galets s'étendant en parallèle, sur la surface de roulement (21, 22) desquels au moins un galet de roulement (3) du châssis à chenilles peut être déplacé pendant le fonctionnement de la chenille, **caractérisé en ce que** les surfaces de roulement (21, 22) d'au moins un rail à galets de la chenille présentent un profil transversal avec un contour convexe sur la zone de bord intérieure et un contour linéaire sur la zone de bord située à l'extérieur et contiguë à celle-ci et la surface de roulement (31, 32) d'au moins un galet de roulement (3) roulant sur celle-ci présente un profil transversal avec un contour convexe sur la zone de bord située à l'extérieur et un contour linéaire sur la zone de bord intérieure contiguë à celle-ci, la zone de contour convexe de surface de roulement du rail à galets étant située en face de la zone de contour linéaire de surface de roulement du galet de roulement (3) et la zone de contour convexe de surface de roulement du galet de roulement (3) étant située en face de la zone de contour linéaire de surface de roulement du rail à galets et la surface de contact principal entre la surface de roulement (31, 32) du galet de roulement (3) et la surface de roulement (21, 22) du rail à galets étant obtenue par la mise en contact des zones de contour linéaires.

**2.** Châssis à chenilles selon la revendication 1, **caractérisé en ce que** le contour convexe du galet de roulement (3) et/ou de la chenille est en forme d'arc et/ou en forme complexe d'arc.

**3.** Châssis à chenilles selon l'une des revendications précédentes, **caractérisé en ce que** la longueur $R_{Horizontal}$ du profil transversal de la surface (31, 32) se déroulant d'au moins un galet de roulement (3) se compose d'une partie linéaire $R2_{Horizontal}$ et d'une partie convexe $R3_{Horizontal}$, où on a :

$$\frac{1}{10} \cdot R_{Horizontal} < R2_{Horizontal} < \frac{9}{10} \cdot R_{Horizontal}$$

avec

$$R3_{Horizontal} = R_{Horizontal} - R2_{Horizontal}.$$

**4.** Châssis à chenilles selon la revendication 3, **caractérisé en ce que**, par le contour convexe de la partie convexe $R3_{Horizontal}$, un décalage en hauteur $R3_{Vertical}$ côté bord du profil transversal $R_{Horizontal}$ se crée par rapport au contour linéaire $R2_{Horizontal}$ du profil transversal $R_{Horizontal}$, dans lequel on a :

$$\frac{1}{500} \cdot R_{Horizontal} < R3_{Vertical} < \frac{1}{10} \cdot R_{Horizontal}.$$

**5.** Châssis à chenilles selon l'une des revendications précédentes, **caractérisé en ce que** la longueur $P_{Horizontal}$ du profil transversal d'au moins une surface de roulement (21, 22) de la chenille se compose d'une partie linéaire $P3_{Horizontal}$ et d'une partie convexe $P2_{Horizontal}$, dans lequel on a :

$$P3_{Horizontal} = P_{Horizontal} - P2_{Horizontal}.$$

**6.** Châssis à chenilles selon la revendication 6, **caractérisé en ce que**, par le contour convexe de la partie convexe $P2_{Horizontal}$, un décalage en hauteur $P2_{vertical}$ côté bord du profil transversal $P_{Horizontal}$ se crée par rapport au contour linéaire $P3_{Horizontal}$ du profil transversal $P_{Horizontal}$, dans lequel on a :

$$\frac{1}{500} \cdot P_{Horizontal} < P2_{Vertical} < \frac{1}{10} \cdot P_{Horizontal}.$$

7. Châssis à chenilles selon l'une des revendications précédentes 6 ou 7, **caractérisé en ce que**, pour les relations de la surface de roulement (21, 22) de la chenille et de la surface de roulement (31, 32) se déroulant du galet de roulement (3), on a :

$$P_{Horizontal} \geq R_{Horizontal}$$

$$P2_{Horizontal} \leq R2_{Horizontal}.$$

8. Châssis à chenilles selon l'une des revendications précédentes, **caractérisé en ce qu'**au moins une surface de roulement (21, 22) de la chenille se divise dans la direction transversale en plusieurs segments de surface de roulement avec une partie linéaire, des parties convexes étant de préférence contiguës des deux côtés aux parties linéaires.

9. Châssis à chenilles selon l'une des revendications précédentes, **caractérisé en ce que** l'au moins un galet de roulement (3) comprend un collet central (30) pour le guidage du galet de roulement (3) sur la chenille, les flancs latéraux (33, 34) du collet central (30) présentant au moins sur certaines parties un contour convexe dans la direction radiale.

10. Châssis à chenilles selon la revendication 9, **caractérisé en ce que** le profil de flanc (33, 34) présente un contour s'alterner de manière linéaire et convexe dans la direction radiale.

11. Châssis à chenilles selon la revendication 10, **caractérisé en ce que** le flanc latéral (33, 34) comprend au moins deux sections linéaires, qui sont séparées par au moins une partie convexe, les parties linéaires présentant de préférence des angles d'inclinaison différents par rapport à la verticale, de préférence entre 0° et 50° ou 0° et 30°, la partie linéaire plus proche du sommet du collet central présentant de manière idéale une inclinaison plus forte.

12. Châssis à chenilles selon les revendications 9 à 11, **caractérisé en ce que** la paroi latérale (23, 24) opposée de l'évidement (25) de la chenille recevant le collet central (30) présente au moins sur certaines parties un contour convexe, et est en particulier composée d'une partie linéaire et d'une partie convexe.

13. Châssis à chenilles selon la revendication 12, **caractérisé en ce que** la partie linéaire de la paroi latérale (23, 24) de l'évidement (25) est inclinée par rapport à la verticale, en particulier selon un angle identique à la partie linéaire opposée du flanc latéral (33, 34) du collet central (30).

14. Machine de travail, en particulier excavateur sur chenilles ou grue sur chenilles, comprenant un châssis à chenilles selon l'une des revendications précédentes.

Fig.1

Fig.2

FIG. 3

EP 3 045 381 B1

# FIG. 4

# FIG. 5

**Fig.6a**

**Fig.6b**

**Fig.6c**

**Fig.7a**

**Fig.7b**

**Fig.7c**

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5704697 A